# FASCICULE DE BREVET EUROPEEN

(11) **EP 3 794 243 B1**
(45) Date de publication et mention de la délivrance du brevet: **22.02.2023**
(21) Numéro de dépôt: 19737160.2
(22) Date de dépôt: 15.05.2019
(51) Int. Cl.: F16D 3/06, F02C 7/36

(54) **DISPOSITIF DE TRANSMISSION DE COUPLE A FROTTEMENTS REDUITS**
DREHMOMENTÜBERTRAGUNGSVORRICHTUNG MIT REDUZIERTER REIBUNG
TORQUE TRANSMISSION DEVICE WITH REDUCED FRICTION

(30) Priorité: 15.05.2018 FR 1854044
(43) Date de publication de la demande: 24.03.2021
(73) Titulaire: SAFRAN AIRCRAFT ENGINES, 75015 Paris (FR)
(72) Inventeur: BLANCHARD, Stéphane Pierre Guillaume, 77550 MOISSY-CRAMAYEL (FR); CONDAT, Helene Myriam, 77550 MOISSY-CRAMAYEL (FR); TRAPPIER, Nicolas Xavier, 77550 MOISSY-CRAMAYEL (FR); PERROT, Laurent Paul François, 77550 MOISSY-CRAMAYEL (FR)
(74) Mandataire: Regimbeau
(86) Numéro de dépôt international: PCT/FR2019/051098
(87) Numéro de publication internationale: WO 2019/220053

(56) Documents cités:
- EP-A1- 3 020 991
- EP-A1- 3 121 469
- WO-A1-2006/048029
- DE-A1-102005 048 982
- FR-A- 1 373 752
- GB-A- 1 372 402
- US-A1- 2015 084 340

## Description

### DOMAINE TECHNIQUE GÉNÉRAL ET ART ANTÉRIEUR

L'invention appartient au domaine technique général des éléments de transmission de puissance, et plus particulièrement de la transmission d'un couple et d'un mouvement rotatif entre deux arbres, notamment dans une turbomachine.

Le document DE 10 2005 048982 décrit une turbomachine comportant un carter, un arbre basse pression monté à rotation dans le carter, un arbre de soufflante monté à rotation par rapport au carter et un ensemble d'accouplement, l'arbre basse pression étant configuré pour entraîner en rotation l'arbre de soufflante au moyen de l'ensemble d'accouplement.

Le document GB 1 372 402 décrit un ensemble d'accouplement comprenant un premier arbre qui s'étend selon un axe, un deuxième arbre coaxial avec le premier arbre et un dispositif de couplage comportant une pluralité d'éléments roulants chacun disposés d'une part dans un logement respectif et d'autre part entre l'une de premières rainures axiales du premier arbre et l'une de deuxièmes rainures axiales du deuxième arbre de sorte à coupler en rotation le premier et le deuxième arbre.

Le document EP 3 020 991 décrit un ensemble d'accouplement comportant un premier arbre, un deuxième arbre coaxial avec le premier arbre et un dispositif de couplage comportant une pluralité d'éléments roulants.

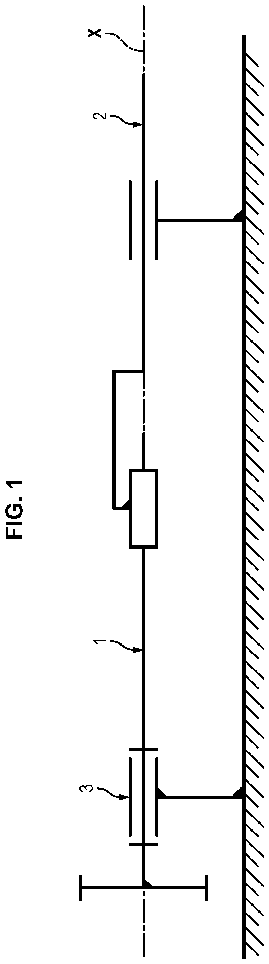

Dans des systèmes mécaniques tels que schématisés en figure 1, comportant deux ou plusieurs arbres entraînés en rotation selon un axe longitudinal X, il est parfois nécessaire pour des raisons de tenue mécanique du système qu'un degré de liberté en translation longitudinale existe entre un arbre moteur, ici un premier arbre 1 monté à rotation sur un châssis 3, et un arbre entraîné, ici un deuxième arbre 2 monté à rotation et à translation par rapport au châssis 3, et monté à translation par rapport au premier arbre 1.

Des solutions classiques, telles que des emmanchements par cannelures, permettent de transmettre des couples importants entre un premier arbre 1 et un deuxième arbre 2 tout en autorisant une translation axiale relative des arbres.

De telles solution présentent toutefois l'inconvénient de comporter d'importantes surfaces en contact, génératrices d'un frottement non négligeable lors du déplacement axial d'un arbre par rapport à l'autre lorsque le couple transmis est important.

Outre la perte énergétique que ces frottements engendrent, entraînant un échauffement local des pièces et une baisse du rendement de la transmission de puissance d'un arbre à l'autre, jusqu'à empêcher le déplacement relatif du premier arbre 1 et du deuxième arbre 2.

Cet amortissement peut avoir un effet néfaste sur le comportement vibratoire du système.

En effet, ce phénomène d'effort résistant variable sur un degré de liberté supposé du système modifie la raideur du système, et déplace ainsi les modes propres de vibration du système par rapport aux modes propres d'un modèle dans lequel l'énergie est transmise sans pertes.

Le déplacement des modes propres peut amener les fréquences de ces modes propres à approcher des fréquences des harmoniques des vibrations générées par le système en fonctionnement.

La dissipation de l'énergie du système peut en être altérée, et ainsi amener le système à vibrer de manière importante, menant à une dégradation du système et pouvant entraîner la ruine par fatigue d'un élément du système.

Ces problèmes sont particulièrement critiques dans une turbomachine, notamment au niveau des accouplements des différentes parties d'un arbre permettant une transmission de puissance entre différents éléments. En effet, dans les cas dans lesquels l'arbre est divisé en plusieurs portions, il est nécessaire de réaliser un couplage pour transmettre le mouvement entre les différentes portions de l'arbre.

Il existe donc un besoin de limiter les pertes énergétiques potentielles d'une liaison mécanique transmettant une puissance de rotation d'un arbre à un autre, notamment lorsque les puissances en présence impliquent des couples importants.

### PRÉSENTATION GÉNÉRALE DE L'INVENTION

L'invention a pour but de limiter les pertes énergétiques d'une liaison mécanique transmettant une puissance de rotation, notamment entre un arbre basse pression d'une turbomachine et un arbre de soufflante d'une turbomachine.

Un autre but de l'invention est de permettre la transmission de couples importants en assurant un mouvement de translation relatif entre deux éléments.

Un autre but de l'invention est de limiter l'impact de la transmission sur le comportement vibratoire du système, particulièrement lorsque celui-ci est soumis à des sollicitations vibratoires importantes.

A cet effet, l'invention propose une turbomachine comportant un carter, un arbre basse pression monté à rotation dans le carter, un arbre de soufflante monté à rotation par rapport au carter et un ensemble d'accouplement, l'arbre basse pression étant configuré pour entraîner en rotation l'arbre de soufflante au moyen de l'ensemble d'accouplement, l'ensemble d'accouplement comportant :
- un premier arbre qui s'étend selon un axe et solidaire d'un parmi l'arbre basse pression et l'arbre de soufflante, le premier arbre comprenant au moins une première portion ayant une face externe dans laquelle sont formées une pluralité de premières rainures axiales,
- un deuxième arbre coaxial avec le premier arbre et solidaire d'un autre parmi l'arbre basse pression et l'arbre de soufflante, le deuxième arbre comprenant au moins une deuxième portion qui entoure la première portion et présente une face interne dans laquelle sont formées une pluralité de deuxièmes rainures axiales,
- un dispositif de couplage comportant une pluralité d'éléments roulants et une cage annulaire, ladite cage étant disposée entre le premier arbre et le deuxième arbre, une pluralité de logements étant formés dans la cage, les éléments roulants étant chacun disposés d'une part dans un logement respectif et d'autre part entre l'une des premières rainures axiales et l'une des deuxièmes rainures axiales de sorte à coupler en rotation le premier et le deuxième arbre,
et dans lequel chaque première et deuxième rainure présente une première et une deuxième surfaces sensiblement planes et s'étendant le long de l'axe, la première et la deuxième surfaces étant inclinées l'une par rapport à l'autre et dans lequel les dimensions d'au moins un des éléments roulants et la disposition d'au moins l'une des deuxièmes rainures par rapport à au moins une des premières rainures sont configurées pour fournir un jeu radial et tangentiel audit au moins un des éléments roulants.

De cette manière, les éléments roulants permettent former des obstacles en coopérant avec les rainures de manière à transmettre le couple d'un arbre à l'autre, tout en permettant un roulement dans les rainures et assurant ainsi un mouvement de translation entre les arbres au cours duquel les frottements sont fortement limités.

Les pertes énergétiques de la liaison mécanique ainsi formée sont donc fortement limitées.

Le comportement vibratoire du système est préservé.

Optionnellement mais avantageusement, l'invention peut être complétée par les caractéristiques suivantes, prises seules ou en combinaison :
- chaque élément roulant est monté libre en rotation dans son logement respectif ;
- les logements de la cage sont alignés axialement de manière à former une série de rangées axiales, les rangées axiales étant distribuées angulairement de façon régulière autour de l'axe de manière à ce que chaque rangée s'étende le long d'une première rainure axiale et d'une deuxième rainure axiale ;
- les éléments roulants comprennent des billes ;
- le dispositif de couplage est mobile en translation le long de l'axe ;
- l'ensemble comprend en outre un premier élément de rappel s'étendant entre la cage et un parmi le premier arbre et le deuxième arbre, le premier élément de rappel étant configuré pour définir la position axiale de la cage par rapport à une parmi la première portion et la deuxième portion ;
- ladite une parmi la première portion et la deuxième portion présente une première butée axiale, la cage présentant une deuxième butée axiale, le premier élément de rappel prenant appui sur chacune de ces butées axiales ;
- l'ensemble comprend en outre un deuxième élément de rappel s'étendant entre la cage et la portion parmi la première portion et la deuxième portion qui présente la première butée, le deuxième élément de rappel étant configuré pour définir la position axiale de la cage par rapport à ladite portion parmi la première portion et la deuxième portion qui présente la première butée ;
- la portion parmi la première portion et la deuxième portion qui présente la première butée présente en outre une troisième butée, et la cage présente en outre une quatrième butée, le deuxième élément de rappel prenant appui sur la troisième butée et la quatrième butée ;
- le premier élément de rappel et le deuxième élément de rappel s'étendent de part et d'autre de la cage ;
- l'arbre basse pression comporte une portion turbine fixée à la turbine basse pression et une portion de butée arrière fixée axialement au carter de la turbomachine et guidée en rotation par rapport au carter, la portion turbine et la portion de butée arrière étant couplées au moyen d'un accouplement par cannelures.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est un schéma cinématique d'un système conforme à l'art antérieur;
- la figure 2 est une vue en coupe partielle en perspective d'un ensemble mécanique conforme à l'invention;
- la figure 3 est une vue en coupe de profil d'un ensemble conforme à l'invention;
- la figure 4 est une vue en coupe de face d'un ensemble conforme à l'invention;
- la figure 5 est une vue de détail du montage d'un élément d'obstacle dans un mode de réalisation d'un ensemble conforme à l'invention;
- la figure 6 est une vue développée d'une coupe de face d'un ensemble conforme à l'invention, mettant en évidence la position relative d'une première rainure, une deuxième rainure et un élément d'obstacle lors de l'entraînement d'un arbre par l'autre; plus particulièrement la figure 6a représente une pluralité d'éléments d'obstacles compris entre une portion interne développée et une portion externe développée; la figure 6b représente en détail le placement d'un élément d'obstacle par rapport à une première rainure et une deuxième rainure lors d'un entraînement;
- la figure 7 est une vue schématique de profil représentant un mode de réalisation d'un ensemble conforme à l'invention ;
- La figure 8 est une figure d'ensemble d'une turbomachine selon l'invention ;
- La figure 9 est une vue de détail du couplage entre l'arbre basse pression et l'arbre de soufflante d'une turbomachine selon l'invention ;
- La figure 10 est une vue de détail du couplage entre la portion turbine et la portion de butée arrière de l'arbre basse pression d'une turbomachine selon l'invention.

### DESCRIPTION D'UN OU PLUSIEURS MODES DE MISE EN OEUVRE ET DE RÉALISATION

L'invention peut s'appliquer à tout système mécanique comportant un premier arbre tournant entraînant un deuxième arbre tournant, par exemple dans une turbomachine dans laquelle un arbre de transmission est morcelé en plusieurs portions couplées entre elles au moyen d'un ensemble d'accouplement.

Un ensemble d'accouplement est schématisé en figure 1 et comprend :
- un premier arbre 1 tournant comprenant au moins une première portion 5 présentant un axe de révolution X, ladite première portion 5 présentant une face externe 6 dans laquelle sont formées une pluralité de premières rainures axiales 7,
- un deuxième arbre 2 comprenant au moins une deuxième portion 8 présentant une face interne 11 dans laquelle sont formées une pluralité de deuxièmes rainures 12, ledit deuxième arbre 2 étant coaxial avec le premier arbre 1 et
- un dispositif de couplage 4 configuré pour permettre une transmission de puissance entre le premier arbre 1 et le deuxième arbre 2.

Dans la présente demande, on appelle axe de révolution du premier arbre 1 l'axe X de rotation dudit premier arbre 1 tournant. La direction axiale correspond à la direction de l'axe X du premier arbre 1, et une direction radiale est une direction perpendiculaire à cet axe et passant par lui. De même, un plan axial est un plan contenant l'axe X et un plan radial est un plan perpendiculaire à cet axe X et passant par lui. La direction tangentielle est une direction perpendiculaire à l'axe X et ne passant pas par lui. La direction circonférentielle est une direction qui s'étend autour de l'axe X. Sauf précision contraire, on utilisera interne et externe, respectivement, sont utilisés en référence à une direction radiale de sorte que la partie ou la face interne (i.e. radialement interne) d'un élément est plus proche de l'axe X que la partie ou la face externe (i.e. radialement externe) du même élément.

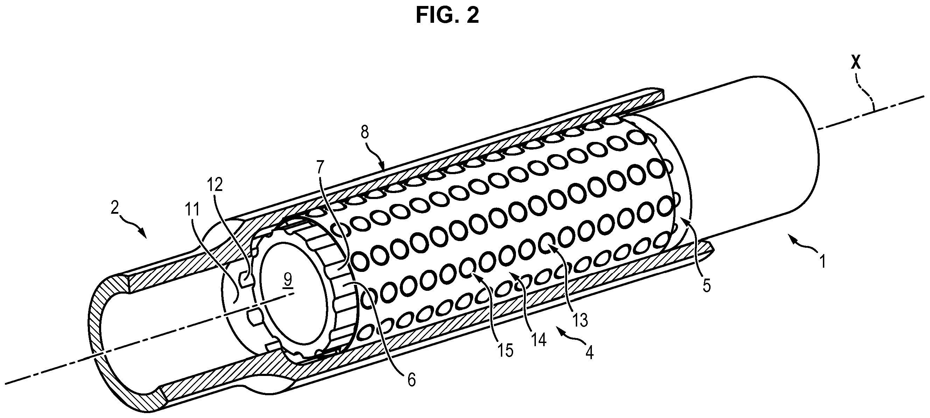

La figure 2 illustre un mode de réalisation dans lequel le premier arbre 1 est coaxial avec l'axe de révolution X de la première portion 5.

Le deuxième arbre 2 comporte une deuxième portion 8 s'étendant selon l'axe de la première portion 5 et présentant une cavité 9 sensiblement cylindrique configurée pour recevoir la première portion 5 du premier arbre 1.

Dans le mode de réalisation illustré, le deuxième arbre 2 et la deuxième portion 8 s'étendent selon l'axe X. Cependant en variante la deuxième portion 8 peut s'étendre selon un axe parallèle à l'axe du deuxième arbre 2.

Le dispositif de couplage 4 comporte une pluralité d'éléments roulants 13 et une cage 14 sensiblement cylindrique.

La cage 14 s'étend entre la première portion 5 du premier arbre 1 et la deuxième portion 8 du deuxième arbre 2 de sorte qu'elle est comprise radialement entre la face externe 6 et la face interne 11.

Une pluralité de logements 15 est par ailleurs formée dans la cage 14. Les éléments roulants 13 sont chacun disposés d'une part dans un logement 15 respectif et d'autre part entre l'une des premières rainures axiales 7 et l'une des deuxièmes rainures axiales 12 de sorte à transmettre un effort tangentiel de l'une parmi ladite première rainure 7 et ladite deuxième rainure 12 à l'autre parmi ladite première rainure 7 et ladite deuxième rainure 12.

Les éléments roulants 13 peuvent comprendre des galets et/ou des billes. Ils assurent la transmission du couple par obstacle entre le premier arbre 1 et le deuxième arbre 2 et permettent de supprimer le contact direct entre le premier arbre 1 et le deuxième arbre 2.

De cette manière, les frottements sont fortement réduits lors du déplacement axial relatif du premier arbre 1 et du deuxième arbre 2, ce qui permet le déplacement axial relatif du premier arbre 1 et du deuxième arbre 2 même lorsque des couples importants sont transmis d'un arbre à l'autre.

Cela permet en outre de réduire la dissipation d'énergie par frottement, et donc d'améliorer le rendement de la transmission de puissance, et de limiter les variations de raideur de la liaison mécanique et donc de l'ensemble.

Cela permet donc de limiter les déplacements de modes propres de l'ensemble et limite le risque d'apparition de phénomènes résonnants. La durée de vie et la fiabilité de l'ensemble s'en trouvent sensiblement accrus.

Dans une forme de réalisation, chaque élément roulant 13 est libre dans son logement 15 respectif de la cage 14 de sorte à pouvoir se déplacer librement en translation dans la première rainure axiale 7 et dans la deuxième rainure axiale 12 correspondante. Cette forme de réalisation permet de réduire encore davantage les frottements en cas de déplacement axial, et donc d'améliorer encore la durée de vie et la fiabilité de l'ensemble.

Les logements 15 sont configurés pour mettre en position les éléments roulants 13 relativement entre eux, ce qui permet notamment d'éviter aux éléments roulants 13 d'être au contact les uns des autres.

Les logements 15 de la cage 14 permettent ainsi d'éviter un frottement des éléments roulants 13 entre eux engendrant des pertes énergétiques, et qui pourrait mener au blocage de certains éléments roulants 13 entraînant une dégradation de l'ensemble d'accouplement.

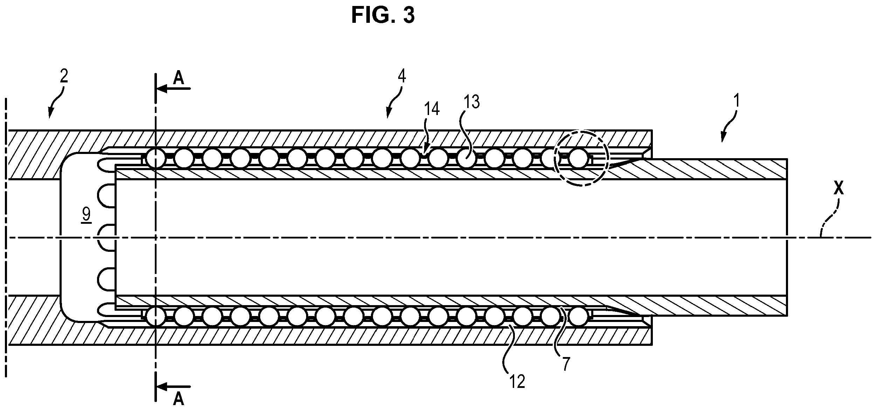

Dans le mode de réalisation illustré en figure 3, les éléments roulants 13 sont répartis axialement selon un espacement régulier.

Cela permet donc de répartir axialement les éléments roulants 13 le long des premières 7 et deuxièmes 12 rainures, de manière à répartir les points de contact sur une zone plus étendue et limiter les niveaux de contraintes locales dans la première portion 5 et la deuxième portion 8.

Cela permet notamment de minimiser la fatigue des éléments roulants 13, des premières 7 et deuxièmes 12 rainures et ainsi d'augmenter la durée de vie de l'ensemble d'accouplement.

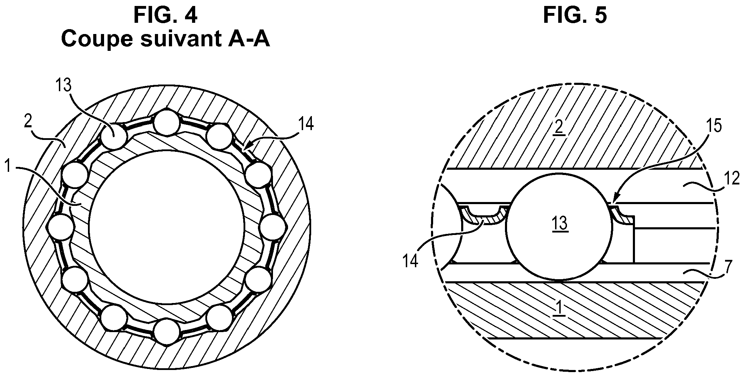

La figure 4 illustre la répartition angulaire, autour de l'axe X, des premières 7 et deuxièmes 12 rainures, des éléments roulants 13 et conséquemment des logements 15.

Le pas angulaire p entre deux deuxièmes rainures 12 adjacentes est constant, et identique au pas angulaire entre deux premières rainures 7 adjacentes, de même que pour deux éléments roulants 13 adjacents et deux rangées de logements 15 adjacentes.

De cette manière, la répartition des contraintes dans la première portion 5 et la deuxième portion 8 est optimisée et permet de limiter les pics de contraintes.

Dans la vue de détail illustrée en figure 5, une bille est mise en position par un logement 15 de la cage 14, la cage 14 étant configurée pour maintenir les éléments roulants 13 en position les uns par rapport aux autres, ainsi que les maintenir en position contre la première portion 5, à l'intérieur de la cage 14.

Dans une variante non illustrée, la cage 14 est configuré pour maintenir les éléments roulants 13 en position contre la deuxième portion 8 à l'extérieur de la cage 14.

La cage 14 permet donc notamment de faciliter le montage des éléments roulants 13 sur l'un des arbres avant d'amener en position relative le premier arbre 1 et le deuxième arbre 2.

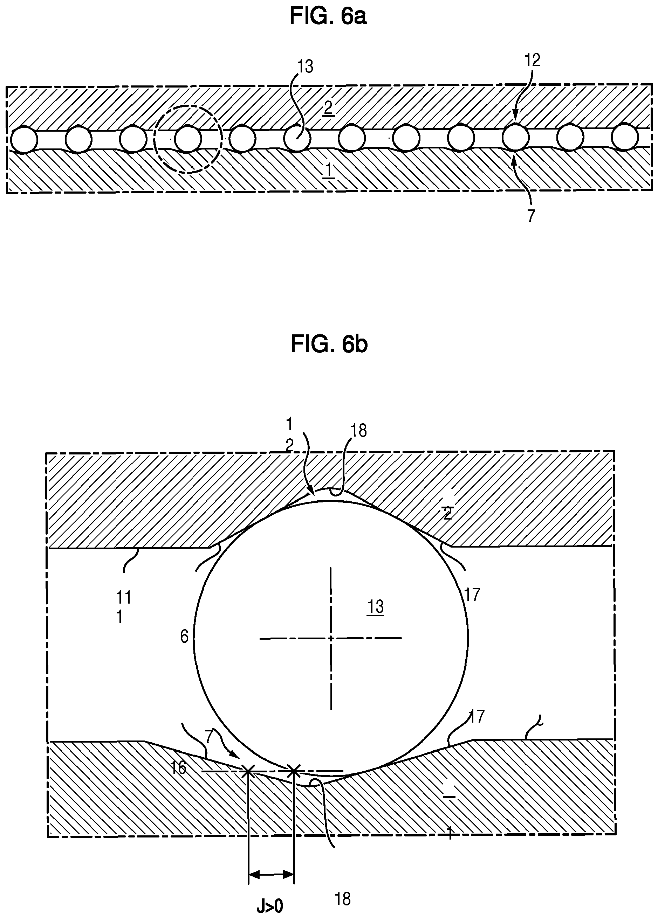

La figure 6a illustre la position tangentielle relative des éléments roulants 13, des premières rainures 7 et des deuxièmes rainures 12 lorsqu'un couple est transmis par le premier arbre 1 au deuxième arbre 2. Sur la figure 6a, une portion angulaire d'une section droite de l'ensemble est représentée sous une forme développée selon une droite.

Un détail d'une telle configuration est illustré en figure 6b. Une première rainure 7, de la même manière qu'une deuxième rainure 12, comporte une première 16 et une deuxième surfaces 17 planes s'étendant longitudinalement.

La première surface 16 et la deuxième surface 17 sont inclinées l'une par rapport à l'autre et se rejoignent en formant un fond 18 de rainure. Une rainure 7, 12 forme ainsi dans ce mode de réalisation préférentiel un dièdre dont l'angle au sommet permet de transmettre les efforts tangentiels à l'élément roulant 13 correspondant quel que soit le sens de rotation du premier arbre 1 ou du deuxième arbre 2.

Dans d'autres modes de réalisation non représentés, le nombre de surfaces formant une rainure 7, 12 peut être supérieur, par exemple 3 ou 4, de manière à former une cuvette logeant les éléments roulants 13.

Grâce aux première et deuxième surfaces 16, 17 inclinées l'une par rapport à l'autre, un effort tangentiel peut être transmis entre le premier 1 et le deuxième arbre 2 dans les deux sens, permettant une transmission de couple (ou de puissance) quel que soit le sens de rotation des arbres.

Les dimensions d'un élément roulant 13 et la disposition d'une deuxième rainure 12 par rapport à une première rainure 7 sont configurées pour fournir un jeu radial et tangentiel à l'élément roulant 13. De cette manière, le blocage d'un élément roulant entre une deuxième rainure 12 et une première rainure 7 est évité, notamment lors du déplacement axial relatif du premier arbre 1 et du deuxième arbre 2.

En outre, cela permet de réduire le nombre de points de contact entre l'élément roulant 13 et les rainures lorsqu'un couple est transmis, et ainsi de réduire les frottements entre l'élément roulant 13 et les rainures 7, 12. En effet, un élément roulant 13 étant localisé entre deux rainures 7, 12, une absence de jeu radial et tangentiel de l'élément roulant 13 impliquerait qu'il présente deux points de contact avec une première rainure 7, et deux points de contact avec une deuxième rainure 12.

Dans le cas représenté, l'élément roulant 13 ne présente qu'un point de contact avec la première rainure 7 et présente deux points de contact avec la deuxième rainure 12. En effet, au cours du fonctionnement, l'effort centrifuge appliqué aux éléments roulants 13 les pousse au contact de la rainure radialement extérieure, ici la deuxième rainure 12. Les trois points de contact empêchent ainsi tout mouvement relatif dans la direction tangentielle entre l'élément roulant 13 et les rainures 7, 12.

Ainsi l'effort est transmis d'une surface d'une première rainure 7 à une surface d'une deuxième rainure 12, réalisant ainsi la transmission du couple d'un arbre à l'autre.

Dans une variante non représentée, un élément roulant 13 ne présente qu'un point de contact avec une première rainure 7 et un point de contact avec une deuxième rainure 12, notamment lorsqu'un couple transmis est suffisamment important, malgré l'effort centrifuge appliqué à l'élément roulant 13, pour déplacer tangentiellement l'élément roulant 13 dans une position d'arc-boutement dans une direction tangentielle entre une première surface 16 d'une parmi une première rainure 7 et une deuxième rainure 12 et une deuxième surface 17 de l'autre parmi la première rainure 7 et la deuxième rainure 12.

De cette manière, le frottement est encore réduit, et cela permet en outre de faciliter la translation relative du premier arbre 1 et du deuxième arbre 2 lorsqu'un couple important est transmis.

Dans une variante non représentée, le diamètre de la face externe 6 de la première portion 5 et le diamètre de la face interne 11 de la deuxième portion 8 sont configurés de manière à coopérer au jeu positif le plus petit, permettant le centrage entre les deux arbres.

Les rainures et l'élément roulant 13 sont également configurés de manière à empêcher l'élément roulant 13 de sortir de la première rainure 7 ou extérieure 12. Pour ce faire, la distance dans une direction radiale entre la face interne 11 et la face externe 6 est inférieure au diamètre d'un élément roulant 13.

En fonction du couple à transmettre par le dispositif de couplage 4, le nombre et les caractéristiques des éléments roulants 13 peuvent varier, notamment afin de limiter les pressions de Hertz et éviter une déformation plastique des éléments roulants 13.

Au cours de l'entraînement d'un arbre par l'autre, les mouvements de translation des arbres peuvent entraîner des translations successives de la cage 14.

Lorsque ces translations successives amènent la cage 14 à une des extrémités des rainures 7, 12, des éléments roulants 13 peuvent se bloquer entre le premier arbre 1 et le deuxième arbre 2, ou sortir de leurs logements 15 respectifs et des rainures 7, 12, ce qui peut entraîner une dégradation du dispositif de couplage 4.

Dans un mode de réalisation, un premier élément de rappel 19 s'étend entre la cage 14 et l'une parmi la première portion 5 et la deuxième portion 8, ledit premier élément de rappel 19 étant configuré pour déplacer axialement la cage 14 par rapport à la portion sur laquelle l'élément de rappel prend appui.

A cet effet, la portion parmi la première portion 5 et la deuxième portion 8 présente une première butée 20 axiale, la cage 14 présentant une deuxième butée axiale 22, et le premier élément de rappel 19 prend appui sur la première butée 20 et la deuxième butée 22.

Lorsque l'élément de rappel 19 est comprimé, il peut donc développer un effort de poussée sur la cage 14 et déplacer ladite cage 14.

Cela permet d'éviter aux éléments roulants 13 de se déplacer axialement jusqu'à l'une des extrémités des rainures 7, 12, et d'entrainer la dégradation du dispositif de couplage 4.

Dans une variante, l'élément de rappel 19 est fixé sur la première butée 20 et la deuxième butée 21. De cette manière, l'élément de rappel 19 peut travailler en compression et en traction et entraîner un déplacement de la cage 14 dans deux sens opposés. Cela permet de ramener la cage 14 régulièrement à une position axiale prédéfinie qui permet un fonctionnement optimal du dispositif de couplage 4.

Au cours de l'entraînement, le couple transmis génère un effort de serrage important de la première portion 5 et de la deuxième portion 8 sur les éléments roulants 13. Lors du serrage des éléments roulants 13 par la première 5 et la deuxième 8 portion, lesdits éléments roulants 13, et donc incidemment la cage 14, ne peuvent se déplacer par rapport aux portions 5, 8 que si lesdites portions 5, 8 se déplacent l'une par rapport à l'autre.

Lorsque le couple transmis diminue, et incidemment l'effort de serrage appliqué aux éléments roulants 13 diminue, par exemple au cours d'une transition de couple ou une décélération, un jeu tangentiel entre les éléments roulants 13 et les rainures 7, 12 apparaît et permet à l'élément de rappel 19 de replacer la cage 14 dans la position prédéterminée par rapport à la portion parmi la première portion 5 et la deuxième portion 8 qui présente la première butée 20.

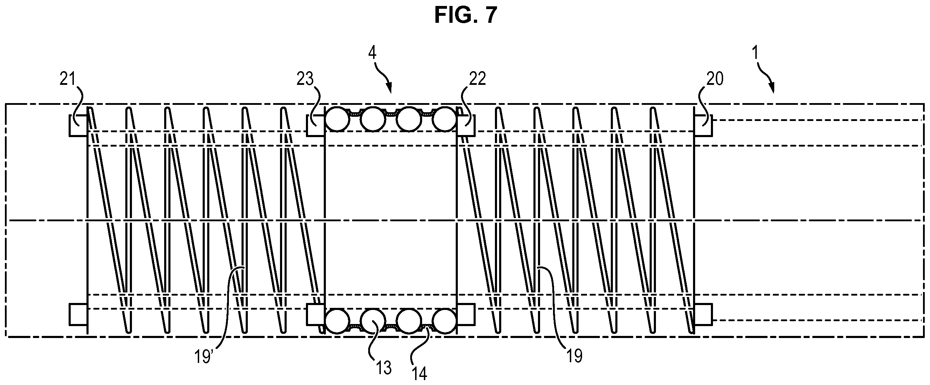

Dans un mode de réalisation représenté en figure 7, le dispositif de couplage 4 comporte en outre un deuxième élément de rappel 19'.

La portion parmi la première portion 5 et la deuxième portion 8 qui présente la première butée 20 présente en outre une troisième butée 21.

La cage présente en outre une quatrième butée 23.

Le premier élément de rappel 19 prend appui d'une part sur la première butée 20 et d'autre part sur la deuxième butée 22, le deuxième élément de rappel 19' prenant appui d'une part sur la troisième butée 21 et d'autre part sur la quatrième butée 23.

De cette manière, la position axiale de la cage 14 par rapport au premier arbre 1 est contrainte à une position optimale. Il n'est pas nécessaire de fixer l'élément de rappel aux butées, chaque élément de rappel 19, 19' pouvant travailler en compression, ce qui facilite le montage et la fabrication.

L'effort développé par les deux éléments de rappel 19, 19' est en outre supérieur à l'effort développé par un seul élément de rappel et permet de ramener la cage 14 en position plus rapidement et précisément.

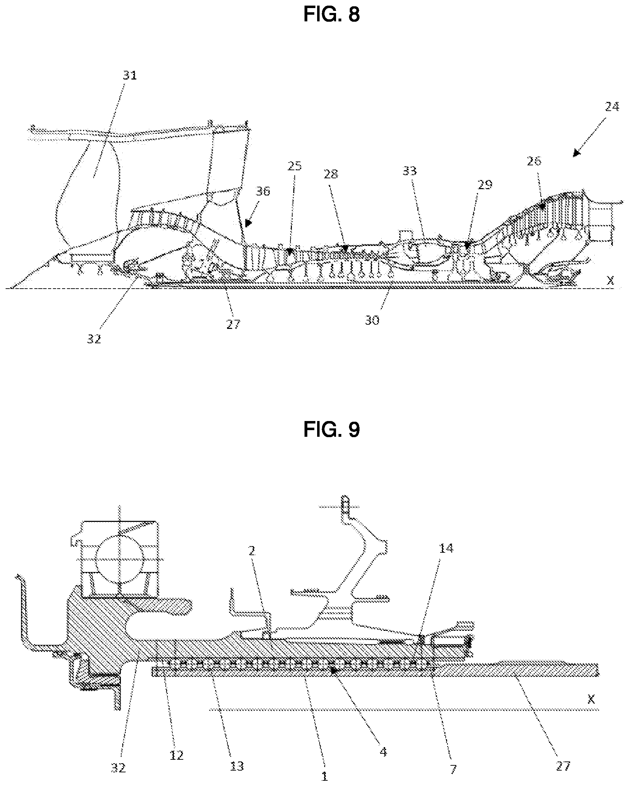

Une turbomachine 24 illustrée en figure 8 comporte un corps basse pression et un corps haute pression.

Le corps basse pression comporte un compresseur basse pression 25, une turbine basse pression 26 et un arbre basse pression 27 configuré pour transmettre une puissance de la turbine basse pression 26 au compresseur basse pression 25, le corps haute pression comportant un compresseur haute pression 28, une turbine haute pression 29 et un arbre haute pression 30 configuré pour transmettre une puissance de la turbine haute pression 29 et le compresseur haute pression 28.

Dans le mode de réalisation représenté, le corps basse pression entraîne en rotation un corps de soufflante comportant une soufflante 31 montée fixe sur un arbre de soufflante 32.

Un flux d'air circule dans la turbomachine et traverse, d'amont en aval, la soufflante 31, le compresseur basse pression 25, le compresseur haute pression 28, une chambre de combustion 33, la turbine haute pression 29 puis la turbine basse pression 26.

L'arbre basse pression 27 entraîne en rotation l'arbre de soufflante 32 au moyen d'un ensemble d'accouplement tel que précédemment décrit. Le dispositif de couplage 4 est ainsi disposé entre l'arbre basse pression 27 et l'arbre de soufflante 32.

Dans le mode de réalisation représenté en figure 9, l'arbre de soufflante 32 est assimilable au deuxième arbre 2 et présente une pluralité de deuxièmes rainures 12 formées sur sa face interne 11, l'arbre de soufflante 27 étant assimilable au premier arbre 1 et présente une pluralité de premières rainures axiales 7 formées sur sa face externe 6.

Dans une variante, l'arbre de soufflante 32 est assimilable au premier arbre 1 et l'arbre basse pression 27 est assimilable au deuxième arbre 2.

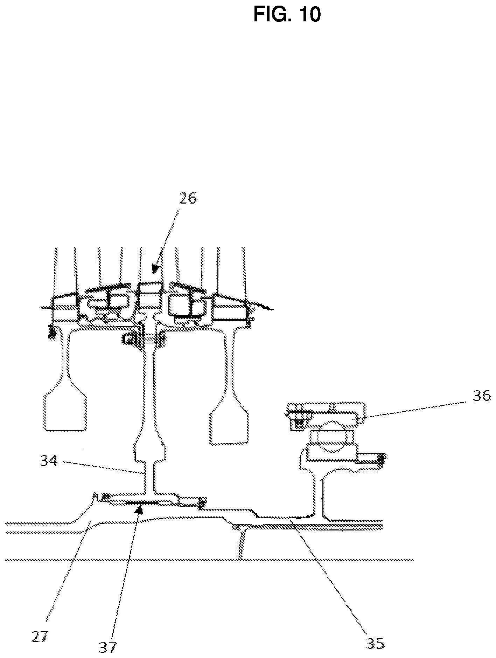

Dans le mode de réalisation représenté en figure 10, l'arbre basse pression 27 est segmenté en plusieurs portions, et comprend notamment une portion turbine 34 fixée à la turbine basse pression 26 et une portion de butée arrière 35 fixée axialement au carter 36 de la turbomachine et guidée en rotation par rapport au carter 36 de la turbomachine.

Un accouplement par cannelures 37 est réalisé entre la portion turbine 34 et la portion de butée arrière 35. Un tel accouplement présente une tolérance à la température importante, ce qui permet à cet accouplement de conserver ses caractéristiques mécaniques et sa fiabilité même lorsqu'il monte en température.

L'utilisation d'un accouplement par cannelures entre la portion turbine 34 et la portion de butée arrière 35 permet donc de conserver les caractéristiques mécaniques de l'accouplement malgré son positionnement à proximité et au contact de pièces chaudes, notamment la turbine basse pression 26 dans laquelle transitent des gaz brûlés à haute température.

## Revendications

1. Turbomachine comportant un carter (35), un arbre basse pression (27) monté à rotation dans le carter (35), un arbre de soufflante (32) monté à rotation par rapport au carter (35) et un ensemble d'accouplement, l'arbre basse pression (27) étant configuré pour entraîner en rotation l'arbre de soufflante (32) au moyen de l'ensemble d'accouplement, la turbomachine étant **caractérisée en ce que** l'ensemble d'accouplement comporte :
- un premier arbre (1) qui s'étend selon un axe (X) et solidaire d'un parmi l'arbre basse pression (27) et l'arbre de soufflante (32), le premier arbre (1) comprenant au moins une première portion (5) ayant une face externe (6) dans laquelle sont formées une pluralité de premières rainures axiales (7),
- un deuxième arbre (2) coaxial avec le premier arbre (1) et solidaire d'un autre parmi l'arbre basse pression (27) et l'arbre de soufflante (32), le deuxième arbre (2) comprenant au moins une deuxième portion (8) qui entoure la première portion (5) et présente une face interne (11) dans laquelle sont formées une pluralité de deuxièmes rainures axiales (12),
- un dispositif de couplage (4) comportant une pluralité d'éléments roulants (13) et une cage (14) annulaire, ladite cage (14) étant disposée entre le premier arbre (1) et le deuxième arbre (2), une pluralité de logements (15) étant formés dans la cage (14), les éléments roulants (13) étant chacun disposés d'une part dans un logement (15) respectif et d'autre part entre l'une des premières rainures axiales (7) et l'une des deuxièmes rainures axiales (12) de sorte à coupler en rotation le premier et le deuxième arbre (1, 2),
et dans lequel chaque première et deuxième rainure (7, 12) présente une première (16) et une deuxième (17) surfaces sensiblement planes et s'étendant le long de l'axe, la première (16) et la deuxième (17) surfaces étant inclinées l'une par rapport à l'autre et dans lequel les dimensions d'au moins un des éléments roulants (13) et la disposition d'au moins l'une des deuxièmes rainures (12) par rapport à au moins une des premières rainures (7) sont configurées pour fournir un jeu radial et tangentiel audit au moins un des éléments roulants (13).

2. Turbomachine selon la revendication 1, dans lequel chaque élément roulant (13) est monté libre dans son logement (15) respectif.

3. Turbomachine selon l'une des revendications 1 ou 2, dans lequel les logements (15) de la cage (14) sont alignés axialement de manière à former une série de rangées axiales, les rangées axiales étant distribuées angulairement de façon régulière autour de l'axe (X) de manière à ce que chaque rangée s'étende le long d'une première rainure axiale (7) et d'une deuxième rainure axiale (12).

4. Turbomachine selon l'une des revendications précédentes, dans lequel les éléments roulants (13) comprennent des billes.

5. Turbomachine selon l'une des revendications précédentes, dans lequel le dispositif de couplage (4) est mobile en translation le long de l'axe (X).

6. Turbomachine selon l'une des revendications précédentes, comprenant un premier élément de rappel (19) s'étendant entre la cage (14) et un parmi le premier arbre (1) et le deuxième arbre (2), le premier élément de rappel (19) étant configuré pour définir la position axiale de la cage (14) par rapport à une parmi la première portion (5) et la deuxième portion (8).

7. Turbomachine selon la revendication 6, dans laquelle ladite une parmi la première portion (5) et la deuxième portion (8) présente une première butée axiale (20), la cage (14) présentant une deuxième butée axiale (22), le premier élément de rappel (19) prenant appui sur chacune de ces butées axiales (20, 22).

8. Turbomachine selon l'une des revendications précédentes, comprenant un deuxième élément de rappel (19') s'étendant entre la cage (14) et la portion parmi la première portion (5) et la deuxième portion (8) qui présente la première butée (20), le deuxième élément de rappel (19') étant configuré pour définir la position axiale de la cage (14) par rapport à ladite portion parmi la première portion (5) et la deuxième portion (8) qui présente la première butée (20).

9. Turbomachine selon la revendication 8, dans laquelle la portion parmi la première portion (5) et la deuxième portion (8) qui présente la première butée (20) présente en outre une troisième butée (21), et la cage (14) présente en outre une quatrième butée (23), le deuxième élément de rappel (19') prenant appui sur la troisième butée (21) et la quatrième butée (23).

10. Turbomachine selon l'une des revendications 6 ou 7 en combinaison avec l'une des revendications 8 ou 9, dans laquelle le premier élément de rappel (19) et le deuxième élément de rappel (19') s'étendent de part et d'autre de la cage (14).

11. Turbomachine selon l'une des revendications 1 à 10, dans laquelle l'arbre basse pression (27) comporte une portion turbine (34) fixée à la turbine basse pression (26) et une portion de butée arrière (35) fixée axialement au carter (36) de la turbomachine et guidée en rotation par rapport au carter (36), la portion turbine (34) et la portion de butée arrière (35) étant couplées au moyen d'un accouplement par cannelures.

## Patentansprüche

1. Turbomaschine mit einem Gehäuse (35), einer Niederdruckwelle (27), die drehbar in dem Gehäuse (35) gelagert ist, einer Gebläsewelle (32), die drehbar in Bezug auf das Gehäuse (35) gelagert ist, und einer Kupplungsanordnung, wobei die Niederdruckwelle (27) so konfiguriert ist, dass sie die Gebläsewelle (32) mittels der Kupplungsanordnung in Drehung versetzt, wobei die Turbomaschine **dadurch gekennzeichnet ist, dass** die Kupplungsanordnung umfasst:
- eine erste Welle (1), die sich entlang einer Achse (X) erstreckt und fest mit der Niederdruckwelle (27) oder der Gebläsewelle (32) verbunden ist, wobei die erste Welle (1) mindestens einen ersten Abschnitt (5) mit einer Außenfläche (6) aufweist, in der mehrere erste axiale Nuten (7) ausgebildet sind,
- eine zweite Welle (2), die koaxial zur ersten Welle (1) verläuft und fest mit der Niederdruckwelle (27) oder der Gebläsewelle (32) verbunden ist, wobei die zweite Welle (2) mindestens einen zweiten Abschnitt (8) umfasst, der den ersten Abschnitt (5) umgibt und eine Innenfläche (11) aufweist, in der mehrere zweite axiale Nuten (12) ausgebildet sind,
- eine Kupplungsvorrichtung (4) mit einer Vielzahl von Wälzkörpern (13) und einem ringförmigen Käfig (14), wobei der Käfig (14) zwischen der ersten Welle (1) und der zweiten Welle (2) angeordnet ist und mehrere Aufnahmen (15) in dem Käfig (14) ausgebildet sind, wobei die Wälzkörper (13) jeweils einerseits in einer jeweiligen Aufnahme (15) und andererseits zwischen einer der ersten axialen Nuten (7) und einer der zweiten axialen Nuten (12) angeordnet sind, um die erste und die zweite Welle (1, 2) drehbar zu koppeln,
und wobei jede erste und zweite Nut (7, 12) eine erste (16) und eine zweite (17) Oberfläche aufweist, die im Wesentlichen eben sind und sich entlang der Achse erstrecken, wobei die erste (16) und die zweite (17) Oberfläche relativ zueinander geneigt sind, und wobei die Abmessungen mindestens eines der Wälzkörper (13) und die Anordnung mindestens einer der zweiten Nuten (12) relativ zu mindestens einer der ersten Nuten (7) so konfiguriert sind, dass ein radiales und tangentiales Spiel für den mindestens einen der Wälzkörper (13 ) bereitgestellt wird.

2. Turbomaschine nach Anspruch 1, bei der jeder Wälzkörper (13) lose in seinem jeweiligen Gehäuse (15) montiert ist.

3. Turbomaschine nach einem der Ansprüche 1 oder 2, bei der die Aufnahmen (15) des Käfigs (14) axial so ausgerichtet sind, dass sie eine Reihe von axialen Reihen bilden, wobei die axialen Reihen winkelmäßig gleichmäßig um die Achse (X) verteilt sind, so dass sich jede Reihe entlang einer ersten axialen Nut (7) und einer zweiten axialen Nut (12) erstreckt.

4. Turbomaschine nach einem der vorhergehenden Ansprüche, wobei die Wälzkörper (13) Kugeln umfassen.

5. Turbomaschine nach einem der vorhergehenden Ansprüche, wobei die Kupplungsvorrichtung (4) entlang der Achse (X) translatorisch bewegbar ist.

6. Turbomaschine nach einem der vorhergehenden Ansprüche, mit einem ersten Vorspannelement (19), das sich zwischen dem Käfig (14) und einer von der ersten Welle (1) und der zweiten Welle (2) erstreckt, wobei das erste Vorspannelement (19) so konfiguriert ist, dass es die axiale Position des Käfigs (14) in Bezug auf einen von dem ersten Abschnitt (5) und dem zweiten Abschnitt (8) definiert.

7. Turbomaschine nach Anspruch 6, wobei der erste Abschnitt (5) oder der zweite Abschnitt (8) einen ersten axialen Anschlag (20) aufweist, der Käfig (14) einen zweiten axialen Anschlag (22) aufweist und das erste Rückstellelement (19) an jedem dieser axialen Anschläge (20, 22) angelehnt ist.

8. Turbomaschine nach einem der vorhergehenden Ansprüche, mit einem zweiten Rückstellelement (19), das sich zwischen dem Käfig (14) und dem Teil aus dem ersten Teil (5) und dem zweiten Teil (8), der den ersten Anschlag (20) aufweist, erstreckt, wobei das zweite Rückstellelement (19') so konfiguriert ist, dass es die axiale Position des Käfigs (14) relativ zu dem Teil aus dem ersten Teil (5) und dem zweiten Teil (8), der den ersten Anschlag (20) aufweist, definiert.

9. Turbomaschine nach Anspruch 8, wobei der Abschnitt von dem ersten Abschnitt (5) und dem zweiten Abschnitt (8), der den ersten Anschlag (20) aufweist, ferner einen dritten Anschlag (21) aufweist, und der Käfig (14) ferner einen vierten Anschlag (23) aufweist, wobei das zweite Rückstellelement (19') an dem dritten Anschlag (21) und dem vierten Anschlag (23) anliegt.

10. Turbomaschine nach einem der Ansprüche 6 oder 7 in Kombination mit einem der Ansprüche 8 oder 9, wobei sich das erste Rückstellelement (19) und das zweite Rückstellelement (19') auf beiden Seiten des Käfigs (14) erstrecken.

11. Turbomaschine nach einem der Ansprüche 1 bis 10, wobei die Niederdruckwelle (27) einen an der Niederdruckturbine (26) befestigten Turbinenabschnitt (34) und einen hinteren Anschlagsabschnitt (35) aufweist, der axial am Gehäuse (36) der Turbomaschine befestigt ist und relativ zum Gehäuse (36) drehbar geführt wird, wobei der Turbinenabschnitt (34) und der hintere Anschlagsabschnitt (35) mittels einer Keilwellenkupplung gekoppelt sind.

## Claims

1. A turbomachine including a casing (35), a low-pressure shaft (27) mounted in rotation in the casing (35), a fan shaft (32) mounted in rotation relative to the casing (35) and a coupling assembly, the low-pressure shaft (27) being configured to drive the fan shaft (32) in rotation by means of the coupling assembly, the turbomachine being **characterized in that** the coupling assembly includes:
- a first shaft (1) which extends along an axis (X) and integral with one among the low-pressure shaft (27) and the fan shaft (32), the first shaft (1) comprising at least a first portion (5) having an outer face (6) in which are formed a plurality of first axial grooves (7),
- a second shaft (2) coaxial with the first shaft (1) and integral with one among the low-pressure shaft (27) and the fan shaft (32), the second shaft (2) comprising at least one second portion (8) which surrounds the first portion (5) and has an inner face (11) in which are formed a plurality of second axial grooves (12),
- a coupling device (4) including a plurality of rolling elements (13) and an annular cage (14), said cage (14) being positioned between the first shaft (1) and the second shaft (2), a plurality of recesses (15) being formed in the cage (14), each of the rolling elements (13) begin positioned on the one hand in a respective recess (15) and on the other hand between one of the first axial grooves (7) and one of the second axial grooves (12) so as to couple in rotation the first and the second shaft (1, 2),
and wherein each first and second groove (7, 12) has a first (16) and a second (17) substantially planar surface and extending along the axis, the first (16) and the second (17) surfaces being inclined relative to one another and wherein the dimensions of at least one of the rolling elements (13) and the positioning of one of the second grooves (12) relative to at least one of the first grooves (7) are configured to supply a radial and tangential clearance to at least one of the rolling elements (13).

2. The turbomachine according to claim 1, wherein each rolling element (13) is mounted free in its respective recess (15).

3. The turbomachine according to one of claims 1 or 2, wherein the recesses (15) of the cage (14) are axially aligned so as to form a series of axial rows, the axial rows being distributed angularly in regular fashion around the axis (X) so that each row extends along a first axial groove (7) and a second axial groove (12).

4. The turbomachine according to one of the preceding claims, wherein the rolling elements (13) comprise balls.

5. The turbomachine according to one of the preceding claims, wherein the coupling device (4) is movable in translation along the axis (X).

6. A coupling assembly according to one of the preceding claims, comprising a first return element (19) extending between the cage (14) and one among the first shaft (1) and the second shaft (2), the first return element (19) being configured to define the axial position of the cage (14) relative to one among the first portion (5) and the second portion (8).

7. The turbomachine according to claim 6, wherein one among the first portion (5) and the second portion (8) has a first axial abutment (20), the cage (14) having a second axial abutment (22), the first return element (19) being supported on each of these axial abutments (20, 22).

8. The turbomachine according to one of the preceding claims, comprising a second return element (19') extending between the cage (14) and the portion among the first portion (5) and the second portion (8) which has the first abutment (20), the second return element (19') being configured to define the axial position of the cage (14) relative to said portion among the first portion (5) and the second potion (8) which has the first abutment (20).

9. The turbomachine according to claim 8, wherein the portion among the first portion (5) and the second portion (8) which has the first abutment (20) also has a third abutment (21), and the cage (14) also has a fourth abutment (23), the second return element (19') being supported on the third abutment (21) and the fourth abutment (23).

10. The turbomachine according to one of claims 6 or 7 in combination with one of claims 8 or 9, wherein the first return element (19) and the second return element (19') extend on either side of the cage (14).

11. The turbomachine according to one of claims 1 to 10, wherein the low-pressure shaft (27) includes a turbine portion (34) attached to the low-pressure turbine (26) and a rear abutment portion (35) attached axially to the casing (36) of the turbomachine and guided in rotation relative to the casing (36), the turbine portion (34) and the rear abutment portion (35) being coupled by means of a splined coupling.
